Europäisches Patentamt

**European Patent Office**

**Office européen des brevets**

(11) Veröffentlichungsnummer: **0 041 725**

**A1**

(12) **EUROPÄISCHE PATENTANMELDUNG**

(21) Anmeldenummer: **81104406.4**

(22) Anmeldetag: **09.06.81**

(51) Int. Cl.³: **B 28 B 7/34**
**//F24J3/02**

(30) Priorität: **10.06.80 DE 3021716**

(43) Veröffentlichungstag der Anmeldung:
**16.12.81 Patentblatt 81/50**

(84) Benannte Vertragsstaaten:
**AT BE CH DE FR GB IT LI LU NL SE**

(71) Anmelder: **Iduso Gesellschaft zur Förderung und**
**Verwertung kreativer Ideen mbH**
**Am Lenkert 11**
**D-5300 Bonn 2(DE)**

(72) Erfinder:
**Der Erfinder hat auf seine Nennung verzichtet**

(54) Verfahren und Vorrichtung zur Herstellung nahtlos in einem Stück gefertigter allseitig geschlossener Hohlkörper aus kaltformbarem und härtbarem bzw. härtendem Material.

(57) Bei dem Verfahren zur Herstellung nahtlos in einem Stück gefertigter allseitig geschlossener Hohlkörper (3) aus kaltformbarem und härtbarem bzw. härtendem Material für die Aufnahme von Gasen oder Flüssigkeiten werden als Vorrichtung zur Ausformung des Hohlraumes Kerne (1) verwendet, welche nach dem Härtungsprozess durch ein Lösungsmittel ausgewaschen oder beim Härten des Hohlkörpers (3) verbrannt werden. Die Kerne (1) besitzen Aussparungen (2), durch die bei Ausformung des Hohlkörpers (3) besondere Innenprofile, z.B. Stützstege oder Stützrippen, entstehen. Das kaltformbare und anschließend härtende bzw. härtbare Material des Hohlkörpers (3) ist z.B. Beton oder Keramik. Im ersten Falle besteht der Kern (1) vorzugsweise aus Polystyrolschaum. Im letzteren Falle besteht der Kern (1) auch aus Zellstoffmasse, z.B. Pappmaché.

Fig. 1

- 1 -

0041725

Iduso
Gesellschaft zur Förderung und
Verwertung kreativer Ideen mbH
Am Lenkert 11

5300 Bonn 2

<u>Verfahren und Vorrichtung zur Herstellung nahtlos in einem
Stück gefertigter allseitig geschlossener Hohlkörper aus
kaltformbarem und härtbarem bzw. härtendem Material</u>

Die Erfindung betrifft ein Verfahren zur Herstellung nahtlos in einem Stück gefertigter allseitig geschlossener Hohlkörper aus kaltformbarem und härtbarem bzw. härtendem Material für die Aufnahme von Gasen oder Flüssigkeiten sowie die
zugehörige Vorrichtung.

Bei derartigen Hohlkörpern ist es erforderlich, den vorgesehenen Hohlraum zunächst durch ein Formstück, den Kern,
auszufüllen und diesen nach dem Erstarren des formbaren Materials schnell und einfach zu entfernen, ohne die Körperhülle zu verletzen.

Verfahren zur Herstellung kaltformbarer und allseitig geschlossener Hohlkörper sind ansich bekannt. Vor allem im
Gießereiwesen sowie in der Porzellan- und Tonindustrie gibt
es bewährte Verfahren. Hierzu gehören z.B. die Verwendung
von Kernen aus Sand, die nach dem Herstellungsprozess herausgeschwemmt werden, die Verwendung von Wachs, das später
durch Erwärmung verflüssigt und entfernt wird, und die Ausbildung von Hohlräumen mittels aufblasbarer Kerne. Selbst
Kerne aus Eis werden in der Literatur erwähnt (vgl. U.S.-
Patent 41 64 933 vom 21.8.1979). In bestimmten Fällen, u.a.
bei Beton oder Zementestrich als Hohlkörpermaterial, insbesondere bei der Massenfertigung, empfehlen sich die bisher bekannten Methoden der Hohlraumbildung nicht. So besteht beispielsweise die Gefahr, daß die Kerne sich während des Ausformungsprozesses durch Druck, Wärme, Wasser
usw. chemisch oder physikalisch verändern, so daß die Ausbildung des Werkstückes negativ beeinflußt wird (z.B. unsaubere Innenraumausbildung, Beeinträchtigung des Härtungsprozesses). Außerdem gelingt die korrekte Ausformung komplizierter, z.B. von Stützstegen oder Stützrippen durchbrochener Hohlräume, insbesondere bei Hohlkörpern mit kleineren Dimensionen, bisher nur durch sehr aufwendige Verfahren. Ferner bestehen mangels Wiederverwendungsmöglichkeit der Kerne generell hohe Kostenbarrieren für die Massenfertigung billiger Produkte. Aus diesen Gründen wird bis heute bei bestimmten Materialien und Formgebungen auf die Ausformung nahtlos in einem Stück gefertigter geschlossener Hohlkörper verzichtet und ggf. dem Zusammenfügen von vorgeformten Einzelteilen der Vorzug gegeben.

Aufgabe der Erfindung ist es, die beschriebenen Nachteile zu vermeiden und ein Herstellungsverfahren anzuwenden, das die angestrebte Hohlraumbildung auf rationelle, preisgünstige Weise gestattet und das auch auf Massenfertigung anwendbar ist.

Diese Aufgabe wird erfindungsgemäß dadurch gelöst, daß für die Ausformung des Hohlraums Kerne aus Polystyrol-Schaum oder ähnlichem Material bzw. Pappmaché verwendet werden, die entweder nach dem Härtungsprozeß durch ein Lösungsmittel ausgewaschen oder beim Härten verbrannt werden.

Die hierzu verwendete Vorrichtung zur Ausübung der Erfindung besteht aus Kernen, die besonders geformte Aussparungen haben, die beim Gießen des Hohlkörpers durch das formbare Material ausgefüllt werden, so daß sich durch dieses Verfahren z.B. bestimmte für die Außen- und Innendruckfestigkeit des Hohlkörpers vorteilhafte Stege, Stützrippen oder Strömungsleitflächen und Kanäle auch bei sehr flachen großflächigen Hohlräumen erzeugen lassen.

Die Verwendung von Kernen aus Polystyrol kann im Falle des Härtens durch Brennen, z.B. bei Keramikprodukten, zu unerwünscht starker Abgasbildung führen. In diesen Fällen hat sich die Verwendung von Kernen aus Zellstoff, insbesondere aus aufbereitetem Pappmaché, die beim Härtungsprozess verbrannt werden, als vorteilhaft erwiesen.

Die mit der Erfindung erzielten Vorteile bestehen insbesondere darin, daß nahtlos in einem Stück geformte Hohlkörper aus kaltformbarem und härtbarem bzw. härtendem Material entweder überhaupt erst oder doch besonders rationell hergestellt werden können. Polystyrol-Schaum bietet dabei den Vorteil, das für die Bildung der Kerne benötigte Material wieder verwenden zu können, da sich die durch das Lösungsmittel (z.B. Nitroverdünnung) aufgelöste und ausgewaschene Polystyrolmasse leicht aus der Lösung abscheiden läßt. Lösungsmittel und Polystyrolmasse können daher bis auf einen geringen Verlust wieder eingesetzt werden. Der nicht ausgewaschene Polystyrolrest dringt beim Auflösungsprozess in die Poren der Hohlkörperinnenwände ein und trägt dadurch zur Abdichtung und Glättung bei.

Für die Bildung größerer Hohlräume empfiehlt sich die Verwendung von Kernen aus Polystyrol-Partikelschaum. Dieser hat bei einem Raumgewicht von 15 - 30 $kg/m^3$ eine geringere Masse und kann daher schneller ausgewaschen werden. Dünne und insbesondere fein verzweigte Hohlräume lassen sich am besten durch Verwendung von Kernen aus extrudiertem Polystyrol-Schaum erzeugen. Bei derartigem Material, das bei einem Raumgewicht von 40 $kg/m^3$ eine Druckfestigkeit von 1,5 $kp/cm^2$ besitzt, ist die Herstellung glatter und dichter Innenwände der Werkstücke - auch unter Druck - möglich. Dies gestattet den Einsatz maschineller Fertigungsverfahren.

Im Falle der Verwendung von Pappmaché für die Herstellung der Kerne, z.B. bei Keramik, entfällt das Herauswaschen durch ein Lösungsmittel, da Pappe beim Härtungsprozess zu Asche verbrennt und leicht herausgespült, -geblasen oder -gesaugt werden kann.

Erfahrungen haben gezeigt, daß das Verfahren z.B. für die Herstellung dünner plattenförmiger druckfester Hohlkörper

- 4 -

0041725

aus Beton zur Aufnahme, Weiterleitung und Abgabe von Wärme mittels Gas- oder Flüssigkeitsströmen hervorragend geeignet ist. Dazu haben sich hohle Platten mit einer minimalen Dicke von 16 mm und einem eingeschlossenen flachen lediglich von Stützstegen durchbrochenen zusammenhängenden Hohlraum mit einer Dicke von 2 - 3 mm als zweckmäßig erwiesen. Für andere Zwecke, z.B. für die Herstellung außen- und innendruckbeständiger Behälterblöcke aus wasserdichtem Beton, die als Wärmespeicher oder zur druckfesten Aufbewahrung von Flüssigkeiten in beliebiger Zahl aneinander gekoppelt werden können, hat sich das Verfahren ebenfalls gut bewährt.

Im folgenden wird die Erfindung anhand von lediglich zwei Ausführungswege darstellenden Zeichnungen näher erläutert. Es zeigt

Figur 1 einen Kern aus extrudierter Polystyrolschaumplatte für die Herstellung dünner, flacher Hohlräume in Hohlkörperplatten gemäß Schnitt AB in Figur 2.

Figur 2 den gleichen Kern wie in Figur 1 von der Seite im Schnitt CD von Figur 1.

Figur 3 die Skizze einer Vorrichtung für die Herstellung der in Figur 1 genannten Hohlkörperplatte zwecks Darstellung der Verfahrensschritte.

Figur 4 eine fertige Hohlkörperplatte in perspektivischer Darstellung.

Figur 5 ein Dach-, Wand- oder Bodenbelag zur Erläuterung der Verwendungsweise von Hohlkörperplatten.

Figur 6 einen Kern als aufgeschäumter Polystyrol-Partikelschaumblock für die Herstellung von Behälterblöcken als Wärmespeicherelemente in Darstellung des Schnitts gemäß Linie AB in Figur 7.

Figur 7 den Kern aus Figur 6 von der Seite gemäß Schnittlinie CD in Figur 6.

Figur 8 den in Figur 6 und 7 dargestellten Kern in Perspektive.

Figur 9 einen Wärmespeicher in Elementbauweise zur Erläuterung der Verwendung von Behälterblöcken als Speicherelemente.

In den Figuren sind der Polystyrol- bzw. der Pappmaché-kern mit dem Bezugszeichen 1, die für die Bildung von Stützstegen erforderlichen Aussparungen (Ausstanzungen, Kanäle) mit dem Bezugszeichen 2 bezeichnet. Bezugszeichen 3 kennzeichnet die um den Polystyrol- bzw. Pappmachékern gelagerte Masse, z.B. Zementestrich oder Ton.

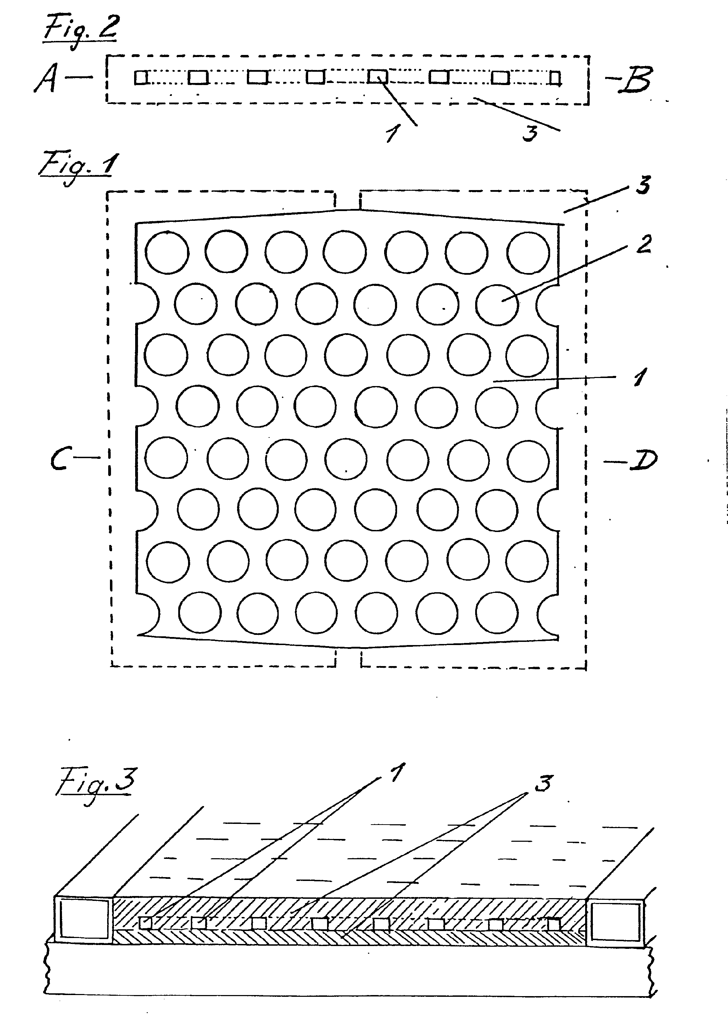

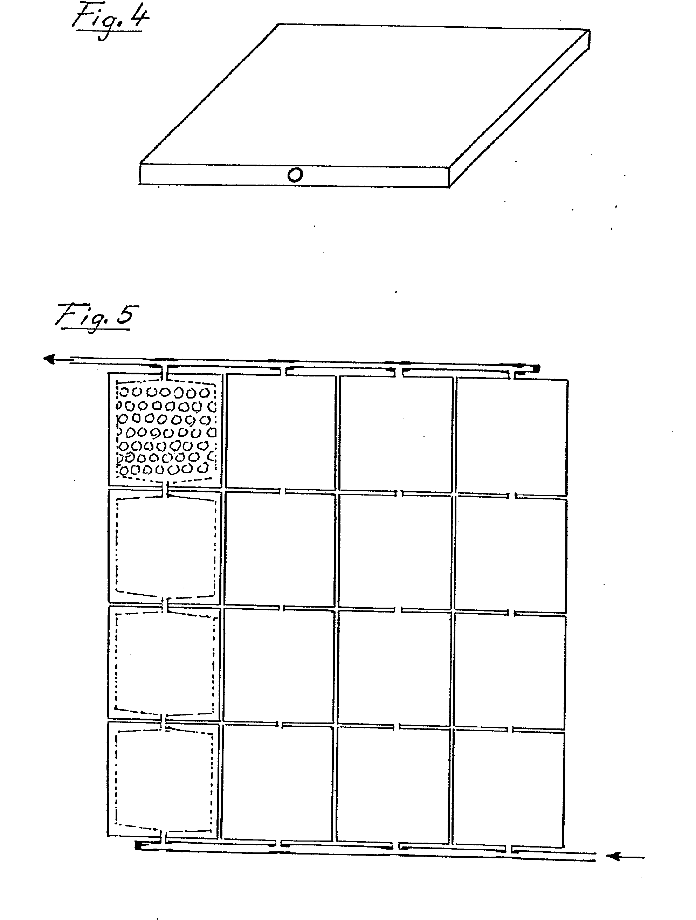

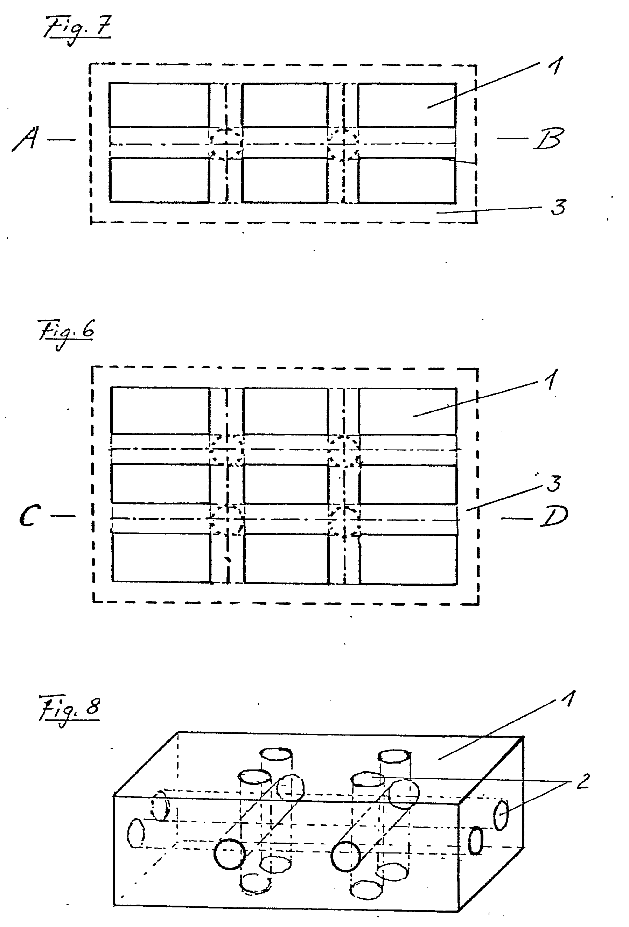

Die in den Figuren 1 bis 5 erläuterte Hohlkörperplatte wird aus Beton in folgenden Verfahrensschritten hergestellt.

Der für die Ausbildung des Hohlraumes erforderliche Kern 1 wird als 2 - 3 mm dicke lochgestanzte Schicht aus extrudiertem Polystyrol auf die in Figur 1 dargestellte Form gebracht. Dabei ist darauf zu achten, daß die an den Zu- und Abfluß-öffnungen der Hohlkörperplatte 3 liegenden Seiten konisch zugeschnitten sind, damit bei vertikaler bzw. schräger Plattenlage keine Luftsäcke entstehen. Die Aussparungen 2 des Polystyrolkerns 1 müssen so beschaffen sein, daß die durch sie entstehenden Stützstege einerseits die Wärmetransparenz von der Außenfläche der Hohlkörperplatte zum wärmeführenden Medium nicht wesentlich beeinträchtigen, andererseits den an die Platte zu stellenden Erfordernissen der Innen- und Außendruckfestigkeit gerecht werden.

Die Herstellung des Werkstückes gemäß Figur 3 geschieht in folgenden Schritten: In einen Rahmen, der auf einer ebenen Unterlage aufliegt, wird zunächst eine ca. 6 mm dicke Schicht aus feinkörnigem wasserundurchlässigem Beton eingebracht. Diese Schicht soll später die wärmetransparente Seite der Hohlkörperplatte bilden. Anschließend wird der Polystyrolkern so aufgelegt, daß an den Rändern mindestens ein Abstand von 10 mm freibleibt. Zugleich werden an zwei gegenüberliegenden Seiten je eine Führungsbuchse aus Metall oder Kunststoff mit einem Durchmesser von ca. 10 mm für die Ausbildung der Zu- und Ablauföffnung eingebracht und mittels eines Stiftes, der durch eine Bohrung im Rahmen geführt wird, paßgenau arretiert. Die Paßgenauigkeit ist wichtig, da nur so die fertigen Platten korrekt aneinandergekuppelt werden können. Danach wird die Form mit Beton so ausgefüllt, daß dieser sich mit der noch feuchten Unterschicht an den Rändern und in den Aussparungen des Kerns innig verbindet. Schließlich wird die Form abgenommen.

Nach dem Abbinden der Hohlkörperplatte wird diese zum Auflösen und Auswaschen des Polystyrolkerns senkrecht so aufgehängt, daß die durch die oben erwähnten Buchsen verstärkten Öffnungen der Hohlkörperplatte nach oben bzw. unten zeigen. In die obere Buchse wird ein Schlauch eingeführt, durch den aus einem geschlossenen Behälter Nitroverdünnung auf den Kern fließt. Die Nitroverdünnung löst das Polystyrol sogleich auf und dringt sehr schnell bis zur unteren Seite der Platte durch. In die untere Buchse ist ebenfalls ein Schlauch eingeführt, der über einen Absperrhahn in einen geschlossenen Auffangbehälter führt. Der Absperrhahn bleibt solange geschlossen, bis sich am oberen Schlauch bzw. Behälter zeigt, daß keine Nitroverdünnung mehr in den sich durch die Auflösung des Polystyrolkerns bildenden Hohlraum einfließt. Nun wird der obere Zufluß gestoppt, der untere Absperrhahn geöffnet, und die Lösung strömt in den Auffangbehälter, wo sich das Polystyrolgelee von der Nitroverdünnung trennt und zu Boden sinkt. Ein Rest des aufgelösten Polystyrols, ca. 10 - 20 %, dringt beim Auflösungsprozess in die inneren Poren des Werkstückes ein, erhärtet dort und trägt so zur Abdichtung und Glättung des Hohlraumes bei. Das aufgefangene Polystyrolgelee geht an den Hersteller zwecks Wiederverwendung zurück.

Der Prozess des Auswaschens mittels Nitroverdünnung wird zugleich zur Dichtigkeitskontrolle des Hohlkörpers genutzt, da Nitroverdünnung eine niedrige Viskosität hat und bei Undichtigkeiten sofort an der Plattenoberfläche sichtbar wird.

Vor Verwendung des Werkstückes, z.B. als Wärmeabsorberplatte als Teil eines Dachbelages gemäß Figur 4, wird die Platte innen z.B. durch ein Bautenschutzmittel versiegelt und auf der Absorberseite schwarz gefärbt. Die Versiegelung und Färbung können auch nach dem Einbau in ein System erfolgen bzw. wiederholt werden.

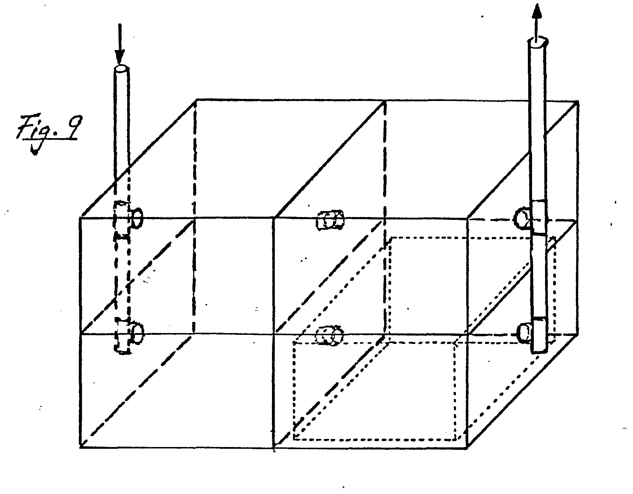

Das in den Figuren 1 bis 9 erläuterte Verfahren ist auch für die maschinelle Fertigung anwendbar. Seine Anwendung ist, wie sich aus einer gleichzeitig eingereichten Patentanmeldung ergibt, volkswirtschaftlich wichtig und dringend. Es ermöglicht z.B. eine Massenproduktion von Absorber- und Heizkörperplatten sowie Wärmespeichern, deren Kosten weit unter dem bisherigen Kostenniveau liegt, eröffnet der Niedrigtemperaturheizung neue Möglichkeiten und gestattet den rentableren Einsatz von Wärmepumpen. Eine deutliche Senkung des Primärenergieanteils für Heizzwecke kann dadurch erreicht werden.

0041725

Iduso
Gesellschaft zur Förderung und
Verwertung kreativer Ideen mbH
Am Lenkert 11

5300 Bonn 2


Verfahren und Vorrichtung zur Herstellung nahtlos in einem
Stück gefertigter allseitig geschlossener Hohlkörper aus
kaltformbarem und härtbarem bzw. härtendem Material


Ansprüche

1. Verfahren zur Herstellung nahtlos in einem Stück gefertigter allseitig geschlossener Hohlkörper (3) aus kaltformbarem und härtbarem bzw. härtendem Material für die Aufnahme von Gasen oder Flüssigkeiten, dadurch gekennzeichnet, daß zur Ausformung des Hohlraums Kerne (1) verwendet werden, welche nach dem Härtungsprozess durch ein Lösungsmittel ausgewaschen oder beim Härten des Hohlkörpers verbrannt werden.

2. Verfahren nach Anspruch 1, dadurch gekennzeichnet, daß das kaltformbare und härtbare bzw. härtende Material (3) Beton ist.

3. Verfahren nach Anspruch 1, dadurch gekennzeichnet, daß das kaltformbare und härtbare bzw. härtende Material (3) Keramik ist.

4. Vorrichtung zur Ausübung des Verfahrens nach den Ansprüchen 1 bis 3, dadurch gekennzeichnet, daß der Kern (1) Aussparungen (2) besitzt, durch die bei Ausformung des Hohlkörpers besondere Innenprofile, zum Beispiel Stützstege oder Stützrippen, entstehen.

5. Vorrichtung nach Anspruch 2, dadurch gekennzeichnet, daß der Kern (1) aus Polystyrolschaum besteht.

6. Vorrichtung nach Anspruch 3, dadurch gekennzeichnet, daß
   der Kern (1) aus Zellstoffmasse, z.B. Pappmaché, besteht.

_Fig. 2_

A —

—B

1

3

_Fig. 1_

3

2

1

C —

—D

_Fig. 3_

1

3

1

3

*Fig.4*

*Fig.5*

Fig. 7

Fig. 6

Fig. 8

Fig. 9

**0041725**

Nummer der Anmeldung

## EUROPÄISCHER RECHERCHENBERICHT

**EP 81 10 4406**

Europäisches Patentamt

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| X | GB - A - 1 555 485 (M. DOBSON)  <br> * Seite 2, Zeilen 77-128; Seite 3, Zeilen 88-91; Figuren 1-6 * | 1,2,4,5 | B 28 B 7/34// <br> F 24 J 3/02 |
| | DE - A - 1 953 514 (W. VOLPEL) <br> * Insgesamt * | 1,2,4 | |
| | GB - A - 1 286 146 (P.A. GRIX) <br> * Ansprüche 1,10; Figuren 1-19 * | 1,2,4 | RECHERCHIERTE SACHGEBIETE (Int. Cl.³) |
| | FR - A - 2 414 987 (VILLEROY & BOCH KERAMISCHE WERKE) <br> * Ansprüche 1-3; Figuren 3,4 * <br> & DE - A - 2 802 652 | 1,3,4 | B 28 B |
| | GB - A - 2 030 065 (NORTON CY.) <br> * Ansprüche 1,4,7,8 * | 1,3 | |
| | US - A - 3 848 040 (J.O. CONFER) <br> * Ansprüche 1,2,5,6; Figuren 1-4 * | 1,3,5 | KATEGORIE DER GENANNTEN DOKUMENTE <br> X: von besonderer Bedeutung <br> A: technologischer Hintergrund <br> O: nichtschriftliche Offenbarung <br> P: Zwischenliteratur |
| | DE - C - 450 967 (L. HONIGMANN) <br> * Insgesamt * | 1,3 | T: der Erfindung zugrunde liegende Theorien oder Grundsätze <br> E: kollidierende Anmeldung <br> D: in der Anmeldung angeführtes Dokument |
| | DE - C - 76 198 (J.B. GRANJON) <br> * Insgesamt * <br> -- ./. | 1,2 | L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 25-08-1981 | BOLLEN |

EPA form 1503.1 06.78

### Europäisches Patentamt

## EUROPÄISCHER RECHERCHENBERICHT

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| PX | US - A - 4 213 929 (M. DOBSON) <br> * Insgesamt * <br><br> ---- | 1,2,4, 5 | |
| | | | **RECHERCHIERTE SACHGEBIETE (Int. Cl. 3)** |